Europäisches Patentamt

European Patent Office

Office européen des brevets

(11) Publication number: **0 373 842**

**A1**

# (12) EUROPEAN PATENT APPLICATION

(21) Application number: **89312853.8**

(22) Date of filing: **08.12.89**

(51) Int. Cl.⁵: **B60R 3/02**

(30) Priority: **10.12.88 GB 8828907**

(43) Date of publication of application:
**20.06.90 Bulletin 90/25**

(84) Designated Contracting States:
**BE DE FR GB IT NL**

(71) Applicant: **ASG (ACCESSORIES) LIMITED**
**Sandown Road Osmaston Park Industrial**
**Estate**
**Derby DE2 8SR(GB)**

(72) Inventor: **Allman, Peter Neville**
**Old Barn House Stanton by Bridge**
**Derbyshire(GB)**

(74) Representative: **Drever, Ronald Fergus et al**
**Swindell & Pearson 48, Friar Gate**
**Derby DE1 1DA(GB)**

(54) **Vehicle access apparatus.**

(57) A vehicle step (14) is mounted on a chassis member (12) of a vehicle by means of elongate components (26). One or more gas struts are provided for control of the pivotal movement of the step (14), each strut comprising a piston and cylinder arrangement extending between brackets attached to the chassis member 12 and the respective elongate component (26). The normal condition of the gas struts is such that the step (14) is retained is a raised inoperative position where the step does not present an obstruction, but where the step is available for the application of pressure by a person's foot to pivot downwardly against the gas pressure and enable the person to gain access to the vehicle interior. When the person's foot is removed from the step (14) the gas pressure automatically returns the step (14) from the operative to the inoperative position.

## Vehicle Access Apparatus

This invention relates to apparatus far facilitating access to the interior of a motor vehicle, particularly but not exclusively an 'off-road' vehicle, where the vehicle body tends to be spaced above the road by a distance greater than normal road vehicles.

According to the present invention there is provided vehicle access apparatus comprising means providing a step, means for movably mounting the step means on a vehicle whereby the step means is available externally of the vehicle, and means for normally retaining the step means in an inoperative position, but enabling movement to an operative position and automatic return to the inoperative position.

Preferably the mounting means comprises an elongate arrangement, one end of which is connected to the step means and the other end of which is pivotally connectible to the vehicle.

Preferably also the retaining means comprises a mounting for connection to the vehicle chassis and a piston and cylinder arrangement, one of the piston and cylinder being connected to the mounting and the other being connected to the elongate arrangement, whereby movement of the piston within the cylinder effects pivotal movement of the elongate arrangement and consequent controlled movement of the step means. More than one piston and cylinder arrangement may be provided for movement of the step means.

The or each piston and cylinder arrangement may comprise a fluid strut.

Embodiments of the present invention will now be described by way of example only, with reference to the accompanying drawings, in which:-

Fig. 1 is a diagrammatic perspective view showing apparatus according to the invention in the form of a side step on a motor vehicle and in an inoperative position;

Fig. 2 is a view similar to Fig. 1 but showing the apparatus in an operative position;

Fig. 3 is a view similar to Fig. 1 but for clarity showing the apparatus with most of the vehicle removed;

Fig. 4 is a view similar to Fig. 2, again showing most of the vehicle removed for clarity;

Fig. 5 is an exploded perspective view showing apparatus according to the invention in the form of a rear step for a motor vehicle;

Fig. 6 is a side elevation of the apparatus of Fig. 5; and

Fig. 7 is a top plan of the apparatus of Figs. 5 and 6.

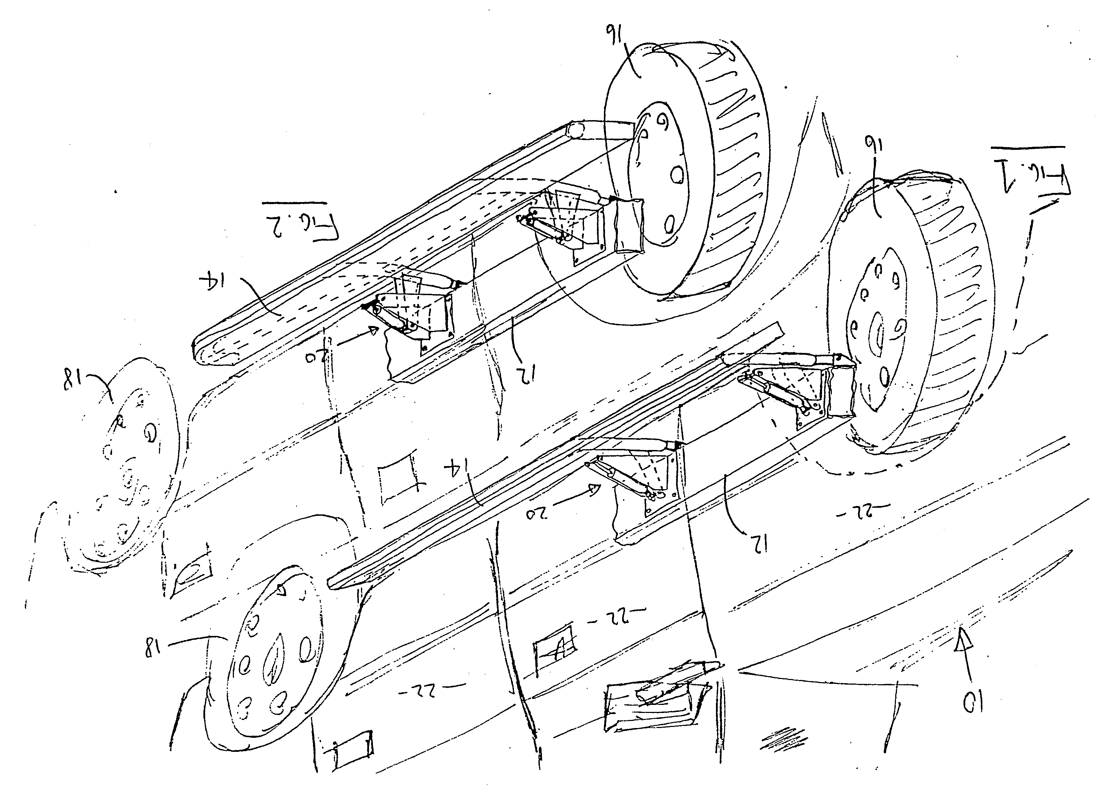

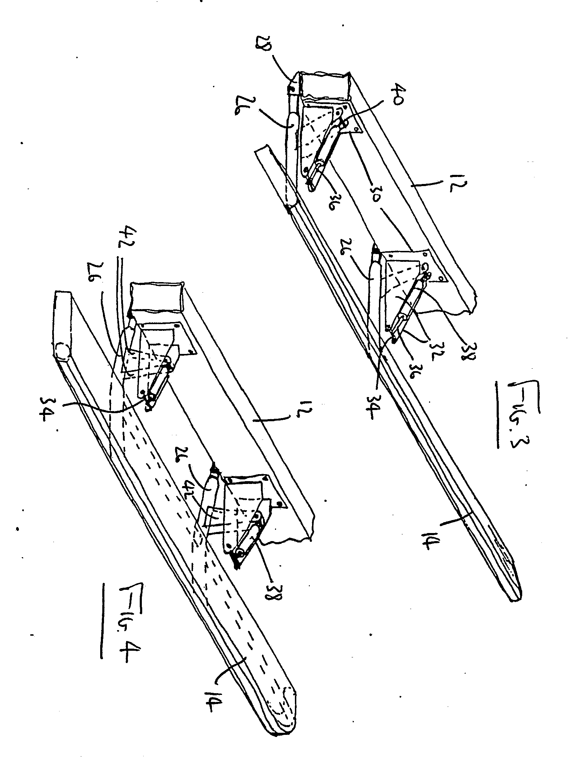

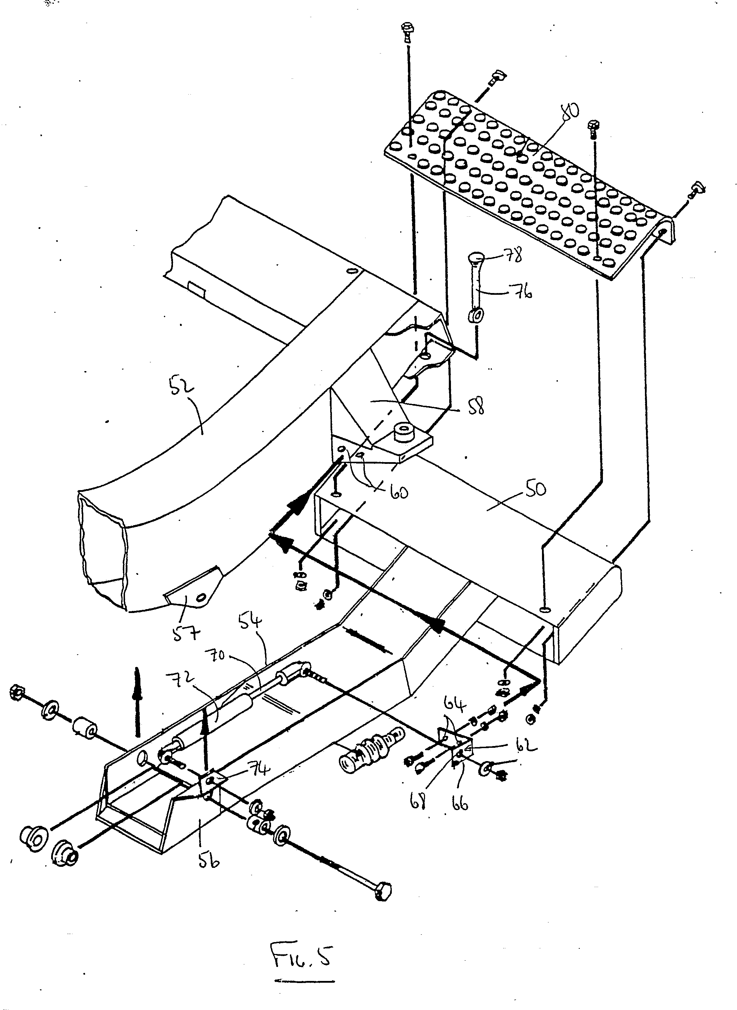

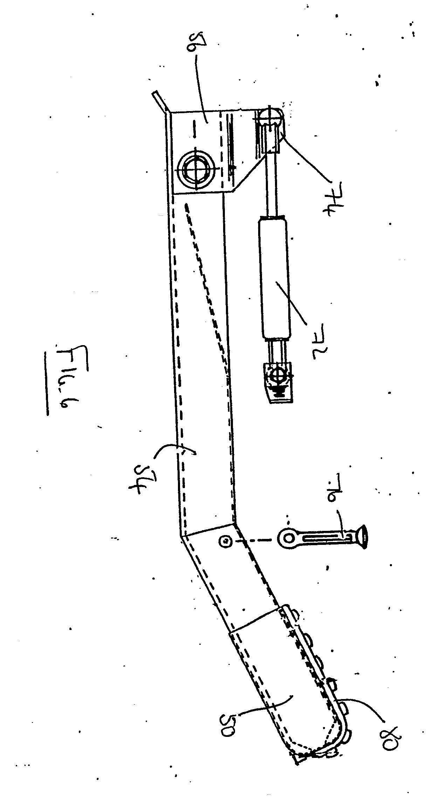

Referring to Figs. 1 to 4 of the drawings, there is shown in outline in Figs. 1 and 2, part of a vehicle 10 of the 'off-road' type, for example a Range Rover, and a part 12 of a chassis of the vehicle. To locate a vehicle step 14 externally of the vehicle to one or each side thereof between the respective front and rear wheels 16, 18, a mounting arrangement 20 is connected to the respective chassis member 12 below the vehicle body to provide the step 14 below body/door panels 22. It is to be appreciated that the mounting arrangement 20 is not generally visible but is shown in full lines in Figs. 1 and 2 for purposes only of clarity.

The step 14 is preferably formed from a moulding, for example of fibreglass, and has a threaded cover, preferably of rubber, fixed thereto for anti-slip purposes. The step 14 is mounted on a tubular structure including a pair of elongate components 26, at spaced apart locations inwardly of respective ends of the step 14, the other ends of the components 26 each being pivotally mounted on a bracket 28 which is adapted to be secured to a lower face of the chassis member 12. The mounting of the step 14 on the components 26 is such that pivotal movement of the latter can move the step 14 between a substantially horizontal and operative position as shown in Fig. 2 and an inoperative position as shown in Fig. 1 where the step 14 is pivoted towards the vehicle 10.

On an outwardly extending face of the chassis member 12, at each of the locations of the brackets 28, is provided a mounting plate 30 arranged to be secured to the chassis member 12, the plate 30 mounting a pair of laterally extending and spaced apart brackets 32. The latter are parallel to one another and between their outer ends mount a pin 34 to which is secured one end of a piston rod 36. The rod 36 is connected to a piston within a cylinder 38 which extends between the brackets 32 in a direction towards the chassis member 12, the other end of the cylinder 38 being mounted on a pin 40 which extends between one pair of adjacent ends of a pair of parallel brackets 42. The latter extend generally downwardly and are secured at their lower ends to the respective component 26 below the brackets 32.

Each piston and cylinder arrangement is in the form of a gas strut whereby normally the cylinders 38 are moved by the gas towards the chassis member 12, this causing the brackets 42 to pivot the components 26 upwardly, thereby moving the step 14 to an inoperative position wherein the step does not present a lateral obstruction. The application of pressure, for example by a person's foot, on the step 14 can pivot the components 26 downwardly, thereby moving the cylinders 38 against the gas pressure. The person stepping on the step 14 can thereby gain access to the vehicle interior and, when the person's foot is removed from the step 14, the gas pressure will automatically return the step 14 from the operative to the inoperative position.

A check strap (not shown), for example of rubber, can be provided on the vehicle chassis to locate, when necessary, on a pin on the step to hold the latter in the event of failure of the gas strut.

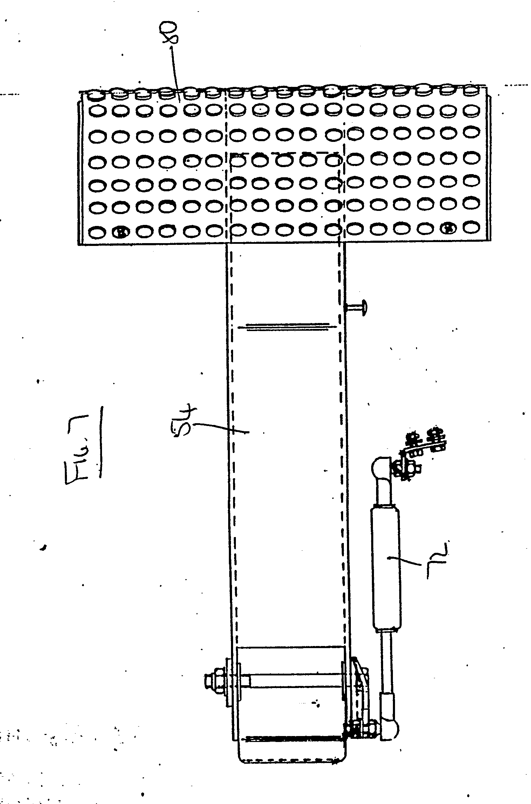

Referring to Figs. 5 to 7 of the drawings, a step 50 is adapted to be located externally of a vehicle to the rear thereof, a chassis member 52 of the vehicle being shown in Fig. 5.

The step 50 is preferably formed from a steel pressing or moulding, for example of fibreglass, and is mounted on one end of an elongate component 54 which can be formed of upwardly open channel section. The other end of the component 54 is pivotally mounted on a bracket 56 which is adapted to be secured to another bracket 57 on a side face of the chassis member 52. The mounting of the step 50 is such that pivotal movement of the component 54 can move the step 50 between a substantially horizontal and operative position (not shown) and an inoperative position as shown in Fig. 6 where the step 50 is pivoted upwardly towards the vehicle.

On the side face of the chassis member 52, there is also provided a mounting bracket 58 provided with a pair of mounting holes 60. A fixing bracket 62 is arranged to be secured to the bracket 58, having appropriate through holes 64 which align with the holes 60 to enable fixing means to extend therethrough. The bracket 62 has a flange 66 with a mounting hole 68 by means of which can be secured one end of a piston rod 70. The latter is connected to a piston within a cylinder 72, a free end of the latter being pivotally connected to a mounting lug 74 on the chassis bracket 56.

A check strap 76, for example of rubber, is located through a hole in a respective part of the vehicle chassis and can locate on a pin (not shown) on a side of the step 50, the strap 76 being utilised to hold the step in the event of failure of the gas strut, being prevented from being removed from the chassis part by an enlarged head 78. A treaded mat 80 is secured to the step 50 for anti-slip purposes.

The piston and cylinder arrangement is in the form of a gas strut whereby normally the cylinder 72 is moved by the gas towards the chassis bracket 56, this causing upward pivoting of the component 54, thereby moving the step 50 to the inoperative position wherein the step does not present a lateral obstruction. The application of pressure, for example by a person's foot, on the step 50 can pivot the component 54 downwardly, thereby moving the cylinder 72 against the gas pressure. The person stepping on the step 50 can thereby gain access to the vehicle interior and, when the person's foot is removed from the step 50, the gas pressure will automatically return the step 50 from the operative to the inoperative position.

There is therefore provided laterally extending and/or rear extending steps for facilitating access to a vehicle, which are particularly useful for an 'off-road' high standing vehicle, but where the steps are automatically retained in an inoperative position so as to avoid becoming an obstruction which might otherwise be susceptible to damage. The use of gas struts also enables a controlled movement of the steps avoiding inadvertent injury to a user.

It is to be appreciated that the steps may be useful for many different types of vehicle and variations in the construction of the steps and the mounting means may be necessary to enable the apparatus to be applied to other designs of vehicle. For example, connection may be made, where appropriate, with vehicle bodies and not chassis. It will also be appreciated that there may be provided a single mounting for the lateral step as an alternative to the pair of mountings described and shown, and a lateral step may be provided on one or both sides of the vehicle.

Various other modifications may of course be made without departing from the invention. For example, for any one vehicle, the configuration of the steps and mounting arrangement may differ from that described and shown, Hydraulic piston and cylinder arrangements may be used instead of gas struts.

## Claims

1. Vehicle access apparatus comprising means providing a step, characterised by means (26,28; 54) for movably mounting the step means (14; 50,80) on a vehicle whereby the step means (14; 50,80) is available externally of the vehicle, and means (32-38; 72,74) for normally retaining the step means (14; 50,80) in an inoperative position, but enabling movement to an operative position and automatic return to the inoperative position.

2. Apparatus according to Claim 1, characterised in that the mounting means comprises an elongate arrangement (26,28; 54), one end of which is connected to the step means (14; 50,80) and the other end of which is pivotally connectible to the vehicle.

3. Apparatus according to Claim 2, characterised in that the retaining means comprises a mounting (30,32; 56) for connection to the vehicle and a piston and cylinder arrangement (36,38;

70,72), one of the piston and cylinder being connected to the mounting (30,32; 56) and the other being connected to the elongate arrangement (26,28; 54), whereby movement of the piston within the cylinder (38; 70) effects pivotal movement of the elongate arrangement (26,28; 54) and consequent controlled movement of the step means (14; 50,80).

4. Apparatus according to Claim 3, characterised in that more than one piston and cylinder arrangement (36,38; 70,72) is provided for movement of the step means (14; 50,80).

5. Apparatus according to Claim 3 or 4, characterised in that the or each piston and cylinder arrangement (36,38; 70,72) comprises a gas strut.

6. Apparatus according to Claim 3 or 4, characterised in that the or each piston and cylinder arrangement is operated by hydraulics.

7. Apparatus according to any of the preceding Claims, characterised in that the step means (14) is formed from a moulding.

8. Apparatus according to Claim 7, characterised in that the moulding is formed of fibreglass.

9. Apparatus according to any of the preceding Claims, characterised in that the step means (50) is formed from a steel pressing.

Fig. 1

Fig. 2

EP 0 373 842 A1

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 517 942 (M.L. CUFFE et al.) * Column 1, line 55 - column 2, line 5; column 2, lines 44-62; figures 1,2 * | 1,2 | B 60 R 3/02 |
| Y | | 3-9 | |
| | --- | | |
| X | US-A-4 180 143 (CLUGSTON) * Colummn 1, line 58 - column 2, line 21; figures 1,2 * | 1 | |
| | --- | | |
| Y | US-A-4 159 122 (STEVENS) * Column 2, lines 13-24; figures 1,2 * | 3,6 | |
| | --- | | |
| Y | US-A-3 039 562 (J.A. WAGNER) * Column 2, lines 35-43; column 3, lines 16-18; figure 1 * | 3,6 | |
| | --- | | |
| Y | US-A-4 569 533 (GRONERT et al.) * Column 2, lines 3-13; figures 1,2 * | 7,8 | |
| | --- | | |
| Y | US-A-4 785 910 (TONKOVICH) * Column 2, lines 55-63; figures 1-3 * | 9 | |
| | ----- | | TECHNICAL FIELDS SEARCHED (Int. Cl.5) B 60 R B 62 D |

The present search report has been drawn up for all claims

| Place of search | Date of completion of the search | Examiner |
|---|---|---|
| THE HAGUE | 12-03-1990 | AREAL CALAMA A. |

EPO FORM 1503 03.82 (P0401)